# EUROPEAN PATENT SPECIFICATION

(11) **EP 3 024 361 B1**
(45) Date of publication and mention of the grant of the patent: **30.06.2021**
(21) Application number: 14741918.8
(22) Date of filing: 23.07.2014
(51) Int. Cl.: A47G 19/02, A47G 23/06

(54) **PLATE FOR SERVING HOT MEALS THEREON**
PLATTE ZUM SERVIEREN WARMER SPEISEN DARAUF
PLATEAU POUR SERVIR DES REPAS CHAUDS

(30) Priority: 23.07.2013 EP 13177666
(43) Date of publication of application: 01.06.2016
(73) Proprietor: Probalco BVBA, 8510 Bellegum (BE)
(72) Inventor: SPELEERS, Pol, B-8790 Waregem (BE); REDJAL, Karim, B-8550 Zwevegem (BE)
(74) Representative: D'Halleweyn, Nele Veerle Trees Gertrudis
(86) International application number: PCT/EP2014/065831
(87) International publication number: WO 2015/011195

(56) References cited:
- EP-A2- 1 224 897
- WO-A1-93/16627
- WO-A1-03/079869
- WO-A2-2010/043957
- DE-A1- 10 107 922
- DE-U1-202012 101 090
- FR-A1- 2 979 212
- JP-U- S5 745 828
- JP-U- S49 112 571

## Description

### Field of the Invention

The present invention concerns a plate suited for directly dressing and serving meals directly thereon, which plate comprises a heat storing material allowing keeping the meal dressed thereon warm for an extended period of time in view of regular plates without heat storing material.

### Background to the Invention

When serving hot meals in restaurants, on events, during plane flights and in other situations where the place of dressing a plate is distant from a place of serving the meal it is a challenge to keep the food warm.

WO 90/14783, US 5,125,391, US 4,304,106 for example disclose trays for storing and transporting plates therein. These trays all include a heat storing material such as a phase change material that can store heat rapidly and release the heat more slowly over an elapsed period of time.

A drawback of such trays is that these are not suited for serving food directly thereon but are intended for storing one or more plates with food thereon to enable serving food on these plates at a desired temperature during a relative long period of time. Moreover the use of such trays is generally considered non-appealing for serving food. Another drawback is that with trays as described in at least US'391 and US'106 the heat storing material is provided in a cavity defined by a top and bottom shell of the tray, whereby in case of damaging one of these shells the heat storing material may leak out of the cavity, especially when at a elevated temperature (generally about 60°C) when the heat storing material is in a fluid state. As such temperature is common in for example a dishwasher, dish washing a damaged tray according to US'391 or US'106 can seriously damage a dishwasher due to leakage of the heat storing material (which when temperature drops again can solidify in the tubings).

Yet another disadvantage is that the heat storing material is not restricted in its flow in the cavity when in a liquid state. As a consequence, when slightly tilting a tray the liquid will flow to one side and promote further tilting and hence instability when carrying a pile of trays.

WO 03/079869 discloses a plate for direct contact with food served thereon, comprising a slot in its lower surface for accommodating a cartridge of heat storing material therein.

A drawback of such plate is that the plate and cartridge are two separate items that need to be assembled and disassembled for each use cycle, which is cumbersome and very impractical in restaurants or on large events where dishwashing the plates and reuse of the plates needs to be fast and effective.

Moreover in a plate according to WO'869 the heat storing material is visible at the bottom of the plate and is considered potentially unappealing for people being served.

It is clear from the above that there remains a need for an appealing, easy to use and handle, safe to use and efficient plate for serving food thereon and for remaining this food warm during an extended period of time in view of food served on normal plates without specific heat storing material.

A plate according to the preamble of claim 1 is disclosed in WO 2010/043957 A2.

### Summary of the Invention

The present invention addresses the above identified need by providing a plate according to claim 1. Preferably, the heat storing material fills the pouch substantially entirely.

It is preferred that the cavity is situated under at least part of the surface of the well of the plate and under at least part of the outer rim of the plate and that the volume of the cavity V(c) is larger than the volume occupied by the pouch thereby defining a free volume in the cavity, the free volume being situated under the outer rim of the plate.

The volume of the cavity V(c) and the volume of the heat storing material in its expanded phase V(e) are preferably chosen such that the ratio V(e)/V(c) is comprised between 0,6 and 0,9.

The heat storing material preferably is a phase change material (PCM) chosen from the group comprising: hydrated salts, organic compounds, solid to solid PCMs, eutectic solutions and/or admixtures thereof.

The pouch is preferably manufactured in a material comprising polypropylene, polyethylene, polyester such as polyethylene terephthalate (PET) or polyethylene terephthalate glycol-modified (PET-G), polyamide and/or combinations thereof, whereby polyamide 66 is highly preferred. In a particularly preferred embodiment, the pouch is manufactured of a sandwich material comprising at least one layer of polypropylene and at least one layer of polyamide or polyester. In a specific embodiment of the pouch according to the previous embodiment, said polypropylene layer is positioned internally with respect to the layer comprising polyamide or polyester or a combination thereof, or is covered by the layer comprising polyamide or polyester or a combination thereof. In a further specific embodiment, the pouch is manufactured of a sandwich material comprising polypropylene layer covered by a polyamide layer. In an alternative embodiment, the pouch is manufactured of a sandwich material comprising polypropylene layer covered by a polyester layer, wherein said polyester is preferably selected from a group comprising polyethylene terephthalate (PET) or polyethylene terephthalate glycol-modified (PET-G).

The plate or at least the upper and or lower part thereof is preferably manufactured in a material selected from the group comprising: ceramic material such as glazed ceramics or porcelain.

According to a preferred embodiment a heat reflective layer is provided between the base part facing the cavity and the pouch.

Further a partitioning wall may be provided in said cavity and defining a compartment wherein the pouch is confined and another compartment substantially corresponding to the free volume.

The plate according to the present invention preferably has a total weight of 1 kg or less, preferably 0,8 kg or less.

The present invention also concerns a method of manufacturing a plate as identified above, said method comprising the steps as described in claim 14.

### Brief Description of the Drawings

Figure 1 schematically represents a perspective cut-out view of a plate according to the present invention;
Figure 2 represents a cross-section according to line II-II in figure 1;
Figure 3 represents an alternative embodiment of a plate as depicted in figure 1.

### Detailed Description of a Preferred Embodiment of the Invention

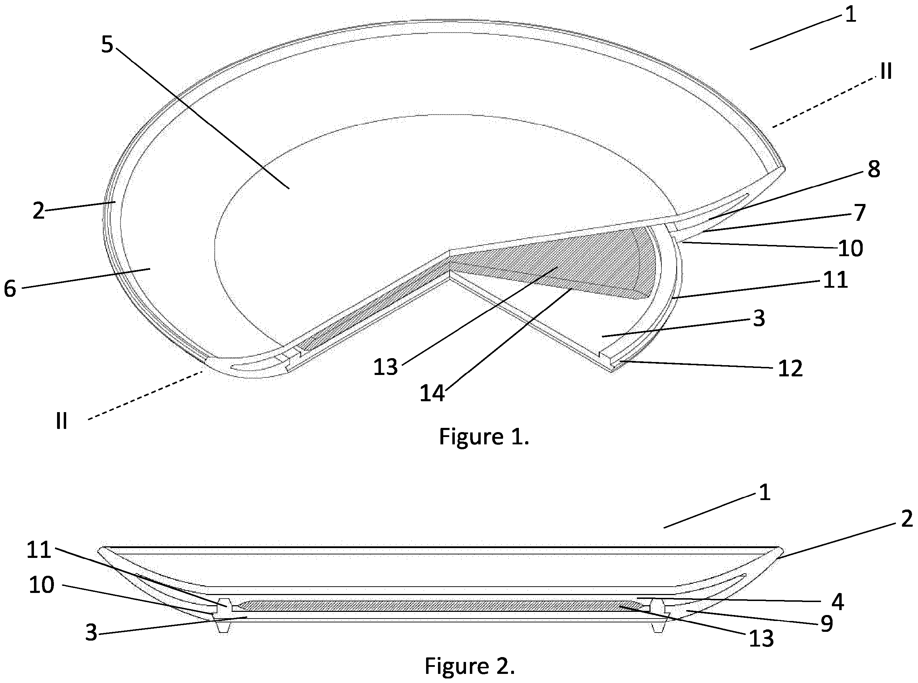

Figure 1 represents a plate 1 according to the present invention comprising an upper part 2 and a base part 3 with a sealed cavity 4 defined in between both part 2 and 3. In this case the upper part 2 comprises a generally planar disc-shaped well 5 and a slanting outer rim 6 extending along the periphery of the well. The outer rim 6 comprises a flange 7 that extends from the outer periphery of the rim towards the base part, thereby defining a void 8 between the outer rim and said flange. At the free end of said flange a rim 9 is provided extending transversally in view of the well and away from said well. In the circular circumference a circular slot 10 is provided.

The base part comprises a rim 11 along its periphery extending into the cavity 4 and defining a circular shoulder portion 12 able to cooperate with the slot circular slot 10 of the upper part for (hermetically) sealing and fixing the base part to the upper part.

The base part 3 and upper part 3 can be fixed by welding (friction welding; laser welding; ultrasonic welding) or by gluing, depending on the material wherein both parts are manufactured.

The upper part and base part can be manufactured from the same material or from different materials chosen from the group comprising: porcelain, plastic, metal or admixtures thereof. Preferably both parts 2 and 3 are manufactured in glazed ceramics such as porcelain, in which case it is preferred to apply glue for fixing the upper part and base part together.

According to the invention a pouch 13 filled, preferably entirely filled without air entrapment, with a heat storing material, most preferably a so-called phase change material 14, is accommodated in said cavity 4.

The pouch 13 is preferably manufactured in a flexible and elastic polymeric material such as polypropylene, polyamide or polyethylene, whereby polyamide 66 is preferred for the reason that it allows good spreading of the PCM material without the sidewalls of the pouch to adhere to one another. The material wherein the pouch is manufactured preferably has a high tear resistance. In a preferred embodiment, the material of which the pouch is manufactured is a sandwich material comprising at least one layer of polypropylene and at least one layer of polyamide or polyester. In a particular embodiment, said sandwich material comprises polypropylene layer that is positioned internally with respect to the layer comprising polyamide or polyester or a combination thereof, or is covered by the layer comprising polyamide or polyester or a combination thereof. In further embodiments, the pouch is manufactured of a sandwich material comprising polypropylene layer covered by a polyamide layer or of a sandwich material comprising polypropylene layer covered by a polyester layer, wherein said polyester is preferably selected from a group comprising polyethylene terephthalate (PET) or polyethylene terephthalate glycol-modified (PET-G).

The PCM material as per the present invention is defined as a material capable of absorbing, storing, and releasing an amount of energy for a long period of time. The latent heat or cold storage process can be achieved through a phase change, like for example from solid to solid, solid to liquid, solid to gas and liquid to gas, once the material has been subjected to a certain temperature called melting temperature.

Moreover, this process can be repeatedly achieved by reaching the melting temperature of the phase change material. The PCM material 14 may include for example: hydrated salts such as Na2 S04, 10H2 O; Na2 HP04, 12H2 O; CaCI2, 6H2 O; [Na2 C03 ]2, 10H2 O; Mg[N03 ]2, 6H2 O; MgCI2, 6H2 O; MgS04, 12 H2 O; sodium acetate trihydrate, glycols such as polyethylene glycol, clathrates, hydroxides. Hydrophobic RT40 Powder, paraffin like octadecane, n-Paraffins, sugar alcohols or fatty acids; paraffin mixed with hydrophobic silica, non-paraffin organic compounds, such as lauric acid, napthalene, magnesium nitrate; acetimide; benzoic acid; strontium bromide; naphthalene; a mixture of urea and benzoic acid, a mixture of benzomide and benzoic acid, aluminum potassium sulfate, ammonium nitrate, fatty acids, esters, silica gel or dry powder, eutectic solutions, ionic liquids or a combination thereof. For assuring different storage and release of heat or cold properties that would be suitable for different types of applications, commercially available PCMs cover a phase change temperature range from - 40 °C to +120 °C, whereby for the present invention PCMs having a phase change temperature between 50°C and 65°C are preferred.

An example of such PCM material is the n-paraffin based Rubitherm ® RT 58 commercialised by RubiTherm ®. This PCM material has a phase change temperature (melting temperature) ranging between 55-59°C (typically 58°C); a heat storage capacity of 178 kJ/kg; a density (solid at 15°C) of 0,88 kg/I; a liquid density (80°C) of 0,77 kg/I; a volume expansion during phase change of 14 %; a heat conductivity of 0,2 W/m*K and a kinetic viscosity (at 90°C) of 32,49 mm2/s.

The pouch, with the PCM in an expanded state occupies a volume V(e) that is lower than the total volume V(c) of the cavity (including the void 8), whereby the ratio V(e)/ V(c) is preferably comprised in the range between 0,6-0,9.

As represented in figure 2, the rim 11 provided on the base part 3 preferably defines a partitioning wall in the cavity, thereby creating a central compartment (below the well 5 of the plate) wherein the pouch is accommodated and a free volume below the outer rim of the plate (substantially corresponding to the void 8).

According to a preferred embodiment, a heat reflective layer 15 or heat insulating layer is provided between the pouch and the base part 3 of the plate 1.

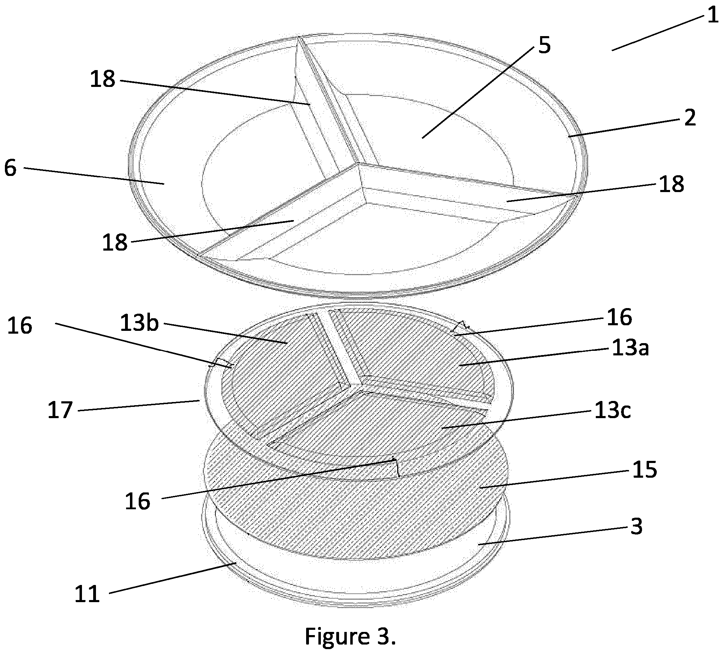

Figure 3 represents an alternative embodiment wherein the cavity is further partitioned in three or more, in this case four, compartments. One compartment under the outer rim of the plate free of PCM material and three compartments under the well each accommodating a pouch with PCM material, whereby one pouch 13a is filled with a PCM material having a phase change temperature T; the second pouch 13b is filled with a PCM having a phase change temperature T2 and the third pouch 13c is filled with a PCM having a phase change temperature T3. In this case T1, T2 and T3 are preferably different and wherein these temperatures can range between 0°C and 120°C, such as to create different zones on the plate that are maintained at different temperatures during a certain period of time sufficient for dressing and serving food on said plate.

In this case the plate preferably comprises an indicator 16, accommodated in for example the outer rim 6 of the plate 1 and connected to temperature sensors 17 designated to each of the PCM comprising compartments of the plate in order to provide a visual or other indication of the temperature in the compartments corresponding to specific sections of the well of the plate. Furthermore the plate may comprise a number of separating walls 18 on the food receiving surface of the well 5, which walls 18 are arranged corresponding to the specific geometry of the PCM pouches for different temperature zones on the plate.

Manufacturing a plate 1 according to the present invention comprises the steps of: a) providing the upper part and the base part; b) providing a pouch filled with a PCM material with a desired phase change temperature; c) accommodating the pouch on the intended top surface of the base part or the intended lower surface of the upper part and subsequently fixing the upper and base parts to enclose the pouch in the cavity defined both the upper and base part of the plate.

In use, the plate and specifically the PCM material accommodated therein is heated to a desired temperature at or above its phase change temperature and subsequently food can be dressed directly on the upper part 2 of the plate 1, preferably in the well 5.

As the PCM material will release the heat stored therein over an extended period of time (generally up to 30 and even 60 minutes) the food dressed and served on the plate will remain warm during that extended period of time.

When serving the plate, a waiter can easily hold the plate at its outer rim as in this part no PCM material is present and as this part is filled with a layer of air that acts as an insulator. In alternative embodiments the free space in the cavity situated under the outer rim of the plate can be filled or partially filled with other insulating materials such as a heat insulating foam.

By providing the PCM material directly under the surface of the plate contacting the food dressed and served thereon the total amount of PCM material can be limited to for example between 60-390cm3, preferably between 60-260cm3, more preferably between 60-130cm3 and most preferably between 90-130cm3, thereby enabling limiting the total weight of the plate (upper part + lower part + pouch + PCM material) to below 2 kg, preferably below 1 kg even when both the upper plate and base plate are manufactured in porcelain.

## Claims

1. A plate (1) for direct contact with food served thereon, said plate comprising:
an upper part (2) defining a generally planar disc-shaped well (5) of the plate for receiving food and a slanting outer rim (6) extending along the periphery of the well (5);
a base part (3) fixed to the upper part (2) thereby defining a sealed cavity (4) between the upper and base parts (2, 3); and
an amount of latent heat storing material (14) disposed in said sealed cavity (4) wherein said heat storing material (14) is provided in a sealed flexible pouch (13);
**characterized in that** said outer rim (6) comprises a flange (7) that extends from the outer periphery of the rim (6) towards the base part (3), thereby defining a void (8) between the outer rim (6) and said flange (7), wherein the base part (3) comprises a rim (11) along its periphery extending into the cavity (4) and defining a circular shoulder portion (12) able to cooperate with a circular slot (10) of the upper part (2) for sealing and fixing the base part (3) to the upper part (2); wherein the rim (11) provided defines a partitioning wall in the cavity (4), thereby creating a central compartment below the well (5) of the plate wherein the pouch (13) is accommodated and a free volume below the outer rim (6) of the plate (1) corresponding to the void (8).

2. The plate (1) according to claim 1, wherein said cavity (4) is situated under at least part of the surface of the well (5) of the plate (1) and under at least part of the outer rim (6) of the plate (1).

3. The plate (1) according to claim 2, wherein the volume of the cavity (4), V(c), is larger than the volume occupied by the pouch (13) thereby defining a free volume in the cavity (4), the free volume being situated under the outer rim (6) of the plate.

4. The plate (1) according to any of the preceding claims, wherein said heat storing material (14) is a phase change material, PCM, having an expanded state wherein the amount of PCM occupies a volume V(e) and a non-expanded state wherein the amount of PCM occupies a volume V(ne).

5. The plate (1) according to claim 4, wherein the ration V(e) / V(c) is comprised between 0,6 and 0,9.

6. The plate (1) according to any of the claims 4-5, wherein the PCM is selected from the group comprising: hydrated salts, organic compounds, solid to solid PCMs, eutectic solutions and/or admixtures thereof.

7. The plate (1) according to claim 1, wherein the upper part (2) and/or base part (3) are made of a ceramic material such as glazed ceramics or porcelain.

8. The plate (1) according to claim 7, having a total weight of 1 kg or less, preferably 0,8 kg or less.

9. The plate (1) according to any of the preceding claims, wherein the pouch (13) is manufactured from a composition comprising polypropylene, polyethylene, polyamide and/or combinations thereof.

10. The plate (1) according to claim 9, wherein the pouch (13) is manufactured from a composition comprising polyamide 66.

11. The plate (1) according to claim 9, wherein the pouch (13) is manufactured of a sandwich material comprising at least one layer of polypropylene and at least one layer of polyamide or polyester.

12. The plate (1) according to any of the preceding claims, wherein a heat reflective layer is provided between the base part (3) facing the cavity (4) and the pouch (13).

13. The plate (1) according to any of the preceding claims comprising a partitioning wall (11) provided in said cavity (4) and defining a compartment wherein the pouch (13) is confined and another compartment substantially corresponding to the free volume.

14. A method of manufacturing a plate (1) as identified in any of claims 1-13, said method comprising the steps of:
providing an upper part (2) and a base part (3), such that the upper part (2) defines a generally planar disc-shaped well (5) of the plate for receiving food and a slanting outer rim (6) extending along the periphery of the well (5);
providing a pouch (13) filled with a heat storing material (14) with desired heat absorbing and releasing properties;
accommodating the pouch (13) on the intended top surface of the base part (3) or the intended lower surface of the upper part (2) and subsequently fixing the upper part (2) and base part (3) to enclose the pouch (13) in a cavity (4) defined by both the upper and base part (2, 3) of the plate (1);
**characterized in that** said outer rim (6) is provided with a flange (7) that extends from the outer periphery of the rim (6) towards the base part (3), thereby defining a void (8) between the outer rim (6) and said flange (7), wherein the base part (3) comprises a rim (11) along its periphery extending into the cavity (4) and defining a circular shoulder portion (12) able to cooperate with a circular slot (10) of the upper part (2) for sealing and fixing the base part (3) to the upper part (2); wherein the rim (11) provided defines a partitioning wall in the cavity (4), thereby creating a central compartment below the well (5) of the plate wherein the pouch (13) is accommodated and a free volume below the outer rim (6) of the plate (1) corresponding to the void (8).

## Patentansprüche

1. Eine Platte (1) für den direkten Kontakt mit darauf servierten Lebensmitteln, wobei die Platte aufweist
ein oberes Teil (2), das eine allgemein ebene, scheibenförmige Vertiefung (5) der Platte zur Aufnahme von Lebensmitteln sowie einen schrägen äußeren Rand (6), der sich entlang des Umfangs der Vertiefung (5) erstreckt, definiert;
ein Basisteil (3), das an dem oberen Teil (2) befestigt ist, wodurch ein abgedichteter Hohlraum (4) zwischen dem oberen Teil (2) und dem Basisteil (3) definiert wird; und
eine Menge an latentwärmespeichernden Material (14), das in dem abgedichteten Hohlraum (4) angeordnet ist, wobei das wärmespeichernde Material (14) in einem abgedichteten flexiblen Beutel (13) vorgesehen ist;
**dadurch gekennzeichnet, dass** der äußere Rand (6) einen Flansch (7) aufweist, der sich vom äußeren Umfang des Randes (6) zum Basisteil (3) hin erstreckt, wodurch ein Hohlraum (8) zwischen dem äußeren Rand (6) und dem Flansch (7) definiert wird, wobei das Basisteil (3) einen Rand (11) entlang seines Umfangs aufweist, der sich in den Hohlraum (4) erstreckt und einen kreisförmigen Schulterabschnitt (12) definiert, der mit einem kreisförmigen Schlitz (10) des oberen Teils (2) zusammenwirken kann, um das Basisteil (3) am oberen Teil (2) abzudichten und zu befestigen; wobei der vorgesehene Rand (11) eine Trennwand in dem Hohlraum (4) definiert, wodurch ein zentrales Fach unterhalb der Vertiefung (5) der Platte, in dem sich der Beutel (13) befindet, und ein freies Volumen unterhalb des äußeren Randes (6) der Platte (1), das dem Hohlraum (8) entspricht, geschaffen wird.

2. Platte (1) nach Anspruch 1, wobei sich der Hohlraum (4) unter mindestens einem Teil der Oberfläche der Vertiefung (5) der Platte (1) und unter mindestens einem Teil des äußeren Randes (6) der Platte (1) befindet.

3. Platte (1) nach Anspruch 2, wobei das Volumen des Hohlraums (4), V(c), größer ist als das von dem Beutel (13) eingenommene Volumen, wodurch in dem Hohlraum (4) ein freies Volumen definiert wird, wobei sich das freie Volumen unter dem äußeren Rand (6) der Platte befindet.

4. Platte (1) nach einem der vorherigen Ansprüche, wobei das wärmespeichernde Material (14) ein Phasenwechselmaterial, PCM, darstellt, das einen expandierten Zustand, in dem die Menge des PCM ein Volumen V(e) einnimmt, und einen nicht expandierten Zustand, in dem die Menge des PCM ein Volumen V(ne) einnimmt, aufweisen kann.

5. Platte (1) nach Anspruch 4, wobei das Verhältnis V(e) / V(c) zwischen 0,6 und 0,9 liegt.

6. Platte (1) nach einem der Ansprüche 4 bis 5, wobei das PCM aus hydratisierten Salzen, organischen Verbindungen, Fest-zu-Fest-PCMs, eutektischen Lösungen und/oder Mischungen davon, gebildet ist.

7. Platte (1) nach Anspruch 1, wobei das obere Teil (2) und/oder das Basisteil (3) aus einem keramischen Material wie glasierter Keramik oder Porzellan besteht.

8. Platte (1) nach Anspruch 7, aufweisend ein Gesamtgewicht von 1 kg oder weniger, vorzugsweise 0,8 kg oder weniger.

9. Platte (1) nach einem der vorherigen Ansprüche, wobei der Beutel (13) aus einer Zusammensetzung hergestellt ist, die Polypropylen, Polyethylen, Polyamid und/oder Kombinationen davon umfasst.

10. Platte (1) nach Anspruch 9, wobei der Beutel (13) aus einer Zusammensetzung hergestellt ist, die Polyamid 66 umfasst.

11. Platte (1) nach Anspruch 9, wobei der Beutel (13) aus einem Sandwichmaterial hergestellt ist, das mindestens eine Schicht aus Polypropylen und mindestens eine Schicht aus Polyamid oder Polyester aufweist.

12. Platte (1) nach einem der vorhergehenden Ansprüche, wobei zwischen dem dem Hohlraum (4) zugewandten Basisteil (3) und dem Beutel (13) eine wärmereflektierende Schicht vorgesehen ist.

13. Platte (1) nach einem der vorherigen Ansprüche mit einer Trennwand (11), die in dem Hohlraum (4) vorgesehen ist und ein Fach, in dem der Beutel (13) eingeschlossen ist, und ein anderes Fach, das im Wesentlichen dem freien Volumen entspricht, definiert.

14. Verfahren zur Herstellung einer Platte (1) nach einem der Ansprüche 1 bis 13, wobei das Verfahren die folgenden Schritte aufweist:
Bereitstellen eines oberen Teils (2) und eines Basisteils (3), so dass das obere Teil (2) eine im Allgemeinen ebene, scheibenförmige Vertiefung (5) der Platte zur Aufnahme von Lebensmitteln und einen sich entlang des Umfangs der Vertiefung (5) erstreckenden schrägen äußeren Rand (6) definiert;
Bereitstellen eines Beutels (13), der mit einem wärmespeichernden Material (14) mit gewünschten wärmeabsorbierenden und wärmeabgebenden Eigenschaften gefüllt ist;
Anbringen des Beutels (13) auf der vorgesehenen oberen Fläche des Basisteils (3) oder der vorgesehenen unteren Fläche des oberen Teils (2) und anschließendes Befestigen des oberen Teils (2) und des Basisteils (3), um den Beutel (13) in einem Hohlraum (4), der sowohl durch den oberen Teil (2) als auch durch das Basisteil (3) der Platte (1) definiert ist, einzuschließen;
**dadurch gekennzeichnet, dass** der äußere Rand (6) mit einem Flansch (7) versehen ist, der sich von der äußeren Peripherie des Randes (6) in Richtung des Basisteils (3) erstreckt, wodurch ein Hohlraum (8) zwischen dem äußeren Rand (6) und dem Flansch (7) definiert wird, wobei das Basisteil (3) einen Rand (11) entlang seiner Peripherie aufweist, der sich in den Hohlraum (4) erstreckt und einen kreisförmigen Schulterabschnitt (12) definiert, der in der Lage ist, mit einem kreisförmigen Schlitz (10) des oberen Teils (2) zusammenzuwirken, um das Basisteil (3) an dem oberen Teil (2) abzudichten und zu befestigen; wobei der vorgesehene Rand (11) eine Trennwand in dem Hohlraum (4) definiert, wodurch ein zentrales Fach unterhalb der Vertiefung (5) der Platte, in dem sich der Beutel (13) befindet, und ein freies Volumen unterhalb des äußeren Randes (6) der Platte (1), das dem Hohlraum (8) entspricht, geschaffen wird.

## Revendications

1. Assiette (1) destinée à être en contact direct avec un aliment servi dessus, ladite assiette comprenant :
une partie supérieure (2) définissant un puits (5) en forme de disque généralement plat de l'assiette pour recevoir un aliment et un bord (6) extérieur incliné s'étendant le long de la périphérie du puits (5) ;
une partie de base (3) fixée à la partie supérieure (2) définissant ainsi une cavité (4) étanchéifiée entre les parties supérieure et de base (2, 3) ; et
une quantité de matériau de stockage de chaleur (14) latente disposée dans ladite cavité (4) étanchéifiée dans laquelle ledit matériau de stockage de chaleur (14) est prévu dans une poche (13) flexible étanchéifiée ;
**caractérisée en ce que** ledit bord (6) extérieur comprend un rebord (7) qui s'étend à partir de la périphérie extérieure du bord (6) en direction de la partie de base (3), définissant ainsi un vide (8) entre le bord (6) extérieur et ledit rebord (7), dans laquelle la partie de base (3) comprend un bord (11) le long de sa périphérie s'étendant à l'intérieur de la cavité (4) et définissant une partie d'épaulement circulaire (12) apte à coopérer avec une fente circulaire (10) de la partie supérieure (2) pour étanchéifier et fixer la partie de base (3) à la partie supérieure (2) ; dans laquelle le bord (11) prévu définit une paroi de cloisonnement dans la cavité (4), créant ainsi un compartiment central au-dessous du puits (5) de l'assiette dans laquelle la poche (13) est logée et un volume libre au-dessous du bord (6) extérieur de l'assiette (1) correspondant au vide (8).

2. Assiette (1) selon la revendication 1, dans laquelle ladite cavité (4) est située sous au moins une partie de la surface du puits (5) de l'assiette (1) et sous au moins une partie du bord (6) extérieur de l'assiette (1).

3. Assiette (1) selon la revendication 2, dans laquelle le volume de la cavité (4), V(c), est plus grand que le volume occupé par la poche (13) définissant ainsi un volume libre dans la cavité (4), le volume libre étant situé sous le bord (6) extérieur de l'assiette.

4. Assiette (1) selon l'une quelconque des revendications précédentes, dans laquelle ledit matériau de stockage de chaleur (14) est un matériau à changement de phase, PCM, présentant un état dilaté dans lequel la quantité de PCM occupe un volume V(e) et un état non dilaté dans lequel la quantité de PCM occupe un volume V(ne).

5. Assiette (1) selon la revendication 4, dans laquelle le rapport V(e)/V(c) est compris entre 0,6 et 0,9.

6. Assiette (1) selon l'une quelconque des revendications 4 et 5, dans laquelle le PCM est choisi dans le groupe comprenant : des sels hydratés, des composés organiques, des PCM solide à solide, des solutions eutectiques et/ou des mélanges de ceux-ci.

7. Assiette (1) selon la revendication 1, dans laquelle la partie supérieure (2) et/ou partie de base (3) sont composées d'un matériau céramique tel que les céramiques glaçurées ou la porcelaine.

8. Assiette (1) selon la revendication 7, présentant un poids total de 1 kg ou moins, de préférence 0,8 kg ou moins.

9. Assiette (1) selon l'une quelconque des revendications précédentes, dans laquelle la poche (13) est fabriquée à partir d'une composition comprenant du polypropylène, du polyéthylène, du polyamide et/ou des combinaisons de ceux-ci.

10. Assiette (1) selon la revendication 9, dans laquelle la poche (13) est fabriquée à partir d'une composition comprenant du polyamide 66.

11. Assiette (1) selon la revendication 9, dans laquelle la poche (13) est fabriquée à partir d'un matériau sandwich comprenant au moins une couche de polypropylène et au moins une couche de polyamide ou de polyester.

12. Assiette (1) selon l'une quelconque des revendications précédentes, dans laquelle une couche réfléchissant la chaleur est prévue entre la partie de base (3) tournée vers la cavité (4) et la poche (13).

13. Assiette (1) selon l'une quelconque des revendications précédentes comprenant une paroi de cloisonnement (11) prévue dans ladite cavité (4) et définissant un compartiment dans lequel la poche (13) est confinée et un autre compartiment correspondant sensiblement au volume libre.

14. Procédé de fabrication d'une assiette (1) telle qu'identifiée selon l'une quelconque des revendications 1 à 13, ledit procédé comprenant les étapes de :
fourniture d'une partie supérieure (2) et d'une partie de base (3), de telle sorte que la partie supérieure (2) définit un puits (5) en forme de disque généralement plat de l'assiette pour recevoir un aliment et un bord (6) extérieur incliné s'étendant le long de la périphérie du puits (5) ;
dotation d'une poche (13) remplie d'un matériau de stockage de chaleur (14) avec des propriétés d'absorption et de libération de chaleur souhaitées ;
logement de la poche (13) sur la surface supérieure voulue de la partie de base (3) ou la surface inférieure voulue de la partie supérieure (2) et fixation subséquente de la partie supérieure (2) et de la partie de base (3) pour renfermer la poche (13) dans une cavité (4) définie par à la fois la partie supérieure et la partie de base (2, 3) de l'assiette (1) ;
**caractérisée en ce que** ledit bord (6) extérieur est doté d'un rebord (7) qui s'étend à partir de la périphérie extérieure du bord (6) en direction de la partie de base (3), définissant ainsi un vide (8) entre le bord (6) extérieur et ledit rebord (7), dans laquelle la partie de base (3) comprend un bord (11) le long de sa périphérie s'étendant à l'intérieur de la cavité (4) et définissant une partie d'épaulement circulaire (12) apte à coopérer avec une fente circulaire (10) de la partie supérieure (2) pour étanchéifier et fixer la partie de base (3) à la partie supérieure (2) ; dans laquelle le bord (11) prévu définit une paroi de cloisonnement dans la cavité (4), créant ainsi un compartiment central au-dessous du puits (5) de l'assiette dans lequel la poche (13) est logée et un volume libre au-dessous du bord (6) extérieur de l'assiette (1) correspondant au vide (8).
